# EUROPÄISCHE PATENTANMELDUNG

(11) **EP 1 310 778 A1**
(43) Veröffentlichungstag der Anmeldung: **14.05.2003**
(21) Anmeldenummer: 01126737.4
(22) Anmeldetag: 09.11.2001
(51) Int. Cl.: G01F 23/16, G01F 23/18

(54) **Füllstandsmessvorrichtung zur Messung der Füllstandshöhe eines Behälters**

(71) Anmelder: Kübler, Heinrich, Dr., 69439 Zwingenberg (DE)
(72) Erfinder: Kübler, Heinrich, Dr., 69439 Zwingenberg (DE)
(74) Vertreter: Clemens, Gerhard, Dr.-Ing.

(57) **Zusammenfassung**

Eine Füllstandsmessvorrichtung (10, 50) zur Messung der Füllstandshöhe (H) eines mit einem Fluid gefüllten Behälters (12), beruhend auf dem Prinzip der hydrostatischen Füllstandsmessung, mit einer, insbesondere im unteren Bereich des Behälters (12) angeschlossenen, Rohrleitung (14), die mit dem Innern des Behälters (12) in Kommunikationsverbindung steht, einer mit der Rohrleitung (14) in Kommunikationsverbindung stehenden Balgeinheit (16) mit einer Stirndruckplatte (24), an der der hydrostatische Druck (P) des gefüllten Behälters (12) ansteht, einer Präzisionswägeeinheit (20, 80), die mit der Stirndruckplatte (24) der Balgeinheit (16) direkt oder indirekt in Wirkverbindung steht und die als Biegestabwägezelleneinheit mit zumindest einem Dehnungsmessstreifen ausgebildet ist, der in Abhängigkeit der Durchbiegung der Biegestabwägezelleneinheit Messsignale abgibt, und einer Auswerteinheit (40), die die Messsignale der Präzisionswägeeinheit (20) auswertet und die Füllstandshöhe (H) berechnet und Letztere einer Anzeigeeinheit (44) und/oder Speichereinheit (46) und/oder Überwachungseinheit (48) zuführt.

## Beschreibung

### TECHNISCHES GEBIET

Die vorliegende Erfindung betrifft eine Füllstandsmessvorrichtung zur Messung des Füllstandes eines mit einem Fluid gefüllten Behälters.

### STAND DER TECHNIK

Die hydrostatische Füllstandsmessung ist die am meisten angewandte Methode zur Messung des Füllstandes eines Behälters und wird beispielsweise in vielen Fällen auf Schiffen mit großen Treibstofftanks eingesetzt.

### DARSTELLUNG DER ERFINDUNG

Der vorliegenden Erfindung liegt die Aufgabe beziehungsweise das technische Problem zugrunde, eine Füllstandsmessvorrichtung anzugeben, die eine besonders hohe Messgenauigkeit und Betriebssicherheit ermöglicht.

Die erfindungsgemäße Füllstandsmessvorrichtung ist durch die Merkmale des unabhängigen Anspruchs 1 gegeben. Vorteilhafte Ausgestaltungen und Weiterbildungen sind Gegenstand der von dem unabhängigen Anspruch 1 abhängigen Ansprüche.

Die erfindungsgemäße Füllstandsmessvorrichtung ist demgemäß gekennzeichnet durch eine, insbesondere im unteren Bereich des Behälters angeschlossene, Rohrleitung, die mit dem Innern des Behälters in Kommunikationsverbindung steht, eine mit der Rohrleitung in Kommunikationsverbindung stehende Balgeinheit mit einer Stirndruckplatte, an der der hydrostatische Druck des gefüllten Behälters ansteht, eine Präzisionswägeeinheit, die mit der Stirndruckplatte der Balgeinheit direkt oder indirekt in Wirkverbindung steht und die als Biegestabwägezelleneinheit mit zumindest einem Dehnungsmessstreifen ausgebildet ist, der in Abhängigkeit der Durchbiegung der Biegestabwägezelleneinheit Messsignale abgibt, und eine Auswerteinheit, die die Messsignale der Präzisionswägeeinheit auswertet und die Füllstandshöhe berechnet und Letztere einer Anzeigeeinheit und/oder Speichereinheit und/oder Überwachungseinheit zuführt.

Die Balgeinheit, die bevorzugt als Metallbalgeinheit ausgebildet ist, überträgt den hydrostatischen Druck der im Behälter befindlichen Flüssigkeit auf die Präzisionswägeeinheit, die bevorzugt eine Linearität von 0,01 % vom Endwert aufweist, sodass eine sehr hohe Messgenauigkeit erzielt werden kann. In Abhängigkeit der Durchbiegung der Wägeeinheit geben die Dehnmessstreifen Signale ab, aus denen dann die Füllstandshöhe berechnet wird.

Die Balgeinheit beziehungsweise die Metallbalgeinheit wird bevorzugt senkrecht nach oben eingebaut, sodass eine Schmutzansammlung innerhalb der Balgeinheit nicht stattfinden kann, wodurch eine dauerhaft zuverlässige Funktion gewährleistet werden kann.

Eine besonders vorteilhafte Ausgestaltung zeichnet sich dadurch aus, dass zwischen der Balgeinheit beziehungsweise zwischen der Stirndruckplatte der Balgeinheit und der Präzisionswägeeinheit eine elastische Einheit, die bevorzugt als Gummipuffereinheit ausgebildet sein kann, angeordnet ist. Durch das Vorsehen einer derartigen elastischen Einheit werden mögliche Verkantungen zwischen der Balgeinheit und der Präzisionswägeeinheit ausgeglichen, sodass Messfehler vermieden werden und insgesamt eine sehr hohe Genauigkeit der Messung durchgeführt werden kann.

Gemäß einer besonders vorteilhaften Ausgestaltung beträgt der erforderliche Hubmessweg der Präzisionswägezelle beziehungsweise der Balgeinheit ca. 0,5 mm (Millimeter) oder sogar noch geringer.

Als Material für die Balgeinheit kommt beispielsweise Edelstahl, Buntmetall oder Incoloy (eingetragene Marke) in Betracht.

Eine besonders vorteilhafte Ausgestaltung zeichnet sich dadurch aus, dass die Balgeinheit einwandig oder mehrwandig, insbesondere zweiwandig, ausgebildet sein kann.

Die Präzisionswägezelle ist außerhalb des Behälters angeordnet und zwar an einer Rohrleitung und weist beispielsweise einen Messbereich von 5 kg (Kilogramm) auf. Damit kann die Füllstandshöhe in einem Behälter von 50 m (Meter) Höhe problemlos mit einer sehr hohen Genauigkeit dauerhaft und zuverlässig gemessen werden, ohne dass sich in dem Behälter oder auf dem Behälter eine Messeinrichtung befindet.

An die Präzisionswägeeinheit ist in einer vorteilhaften Ausgestaltung ein Messverstärker angeschlossen, der bevorzugt ebenfalls eine Linearität von 0,005 % des Endwertes aufweist.

Der Einbau der Füllstandsmessvorrichtung kann entfernt vom Behälter an längeren Rohrleitungen vorgenommen werden. Die Messverstärker beziehungsweise die Auswerteinheit kann ebenfalls wiederum entfernt von der Präzisionswägeeinheit in geschützten Räumen eingebaut werden. Dadurch ist es problemlos möglich, die in explosionsgefährdeten Umgebungen geforderten Sicherheitsauflagen einzuhalten.

Nachfolgend ist die Funktionsweise und sind die Vorteile der erfindungsgemäßen Füllstandsmessvorrichtung beispielhaft beschrieben:

Besonders vorteilhaft ist, dass im Behälter keine Antennen, Sensoren, Sonden oder Schwimmer erforderlich sind. Die Füllstandsmessvorrichtung wird außerhalb vom Behälter unten seitlich oder in Rohrleitungen, insbesondere in T-Stücken, entfernt vom Behälter eingebaut. Mit einem unten offenen Metallbalg wird der hydrostatische Druck der Flüssigkeit am Boden des Behälters auf eine Präzisions-Wägezelle übertragen. Dabei kommt nur der Metallbalg innen mit der Flüssigkeit in Berührung. Die Präzisions-Wägezelle befindet sich oberhalb des Metallbalges in trockener Umgebung und ist geschützt bevorzugt in einem dichten Edelstahlgehäuse, so dass auch die Vorschriften hinsichtlich explosionsgefährdeter Umgebung problemlos eingehalten werden können.

Spezielle Leitungen sind am oder auf dem Behälter nicht erforderlich. Die Präzisions-Wägezelle benötigt keine Netzspannung. Die Messspannung des DMS-Messverstärkers beträgt beispielsweise nur 10 Volt und der Messstrom beispielsweise nur ca. 10 mA. Die erfindungsgemäß eingesetzte Präzisions-Wägezelle weist einen Dehnungs-Messstreifen (DMS) von ca. 1000 Ohm und eine Linearität von 0,01 % auf.

Der DMS.-Messverstärker kann weit entfernt vom Behälter in geschützten Räumen eingebaut werden und hat bevorzugt einen Analogausgang bis zu 20 mA.

Darüber hinaus können problemlos Grenzwertsignalgeber und Füllstands-Anzeigeinstrumente angeschlossen werden. Wenn die Dichte der im Behältnis befindlichen Flüssigkeit bekannt ist, kann im Werk mit Druckluft der DMS-Messverstärker auf die zu messende Füllstandshöhe im Behälter eingestellt werden.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Übersicht der Anordnung einer Füllstandsmessvorrichtung nach dem hydrostatischen Prinzip zur Füllstandshöhenmessung eines Behälters mit anschließender Auswertung,
- Fig. 2: schematische Detailschnittansicht gemäß Detail A in Fig. 1 eines ersten Ausführungsbeispiels einer Füllstandsmessvorrichtung und
- Fig. 3: schematische Detailschnittansicht gemäß Detail A in Fig. 1 eines zweiten Ausführungsbeispiels einer Füllstandsmessvorrichtung.

### WEGE ZUM AUSFÜHREN DER ERFINDUNG

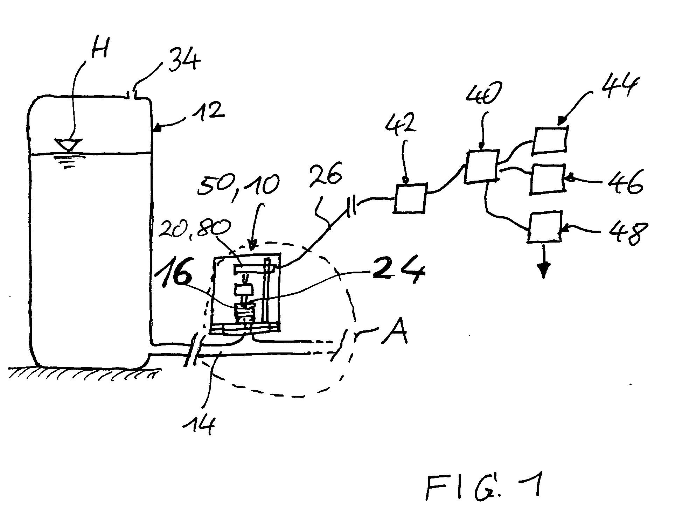

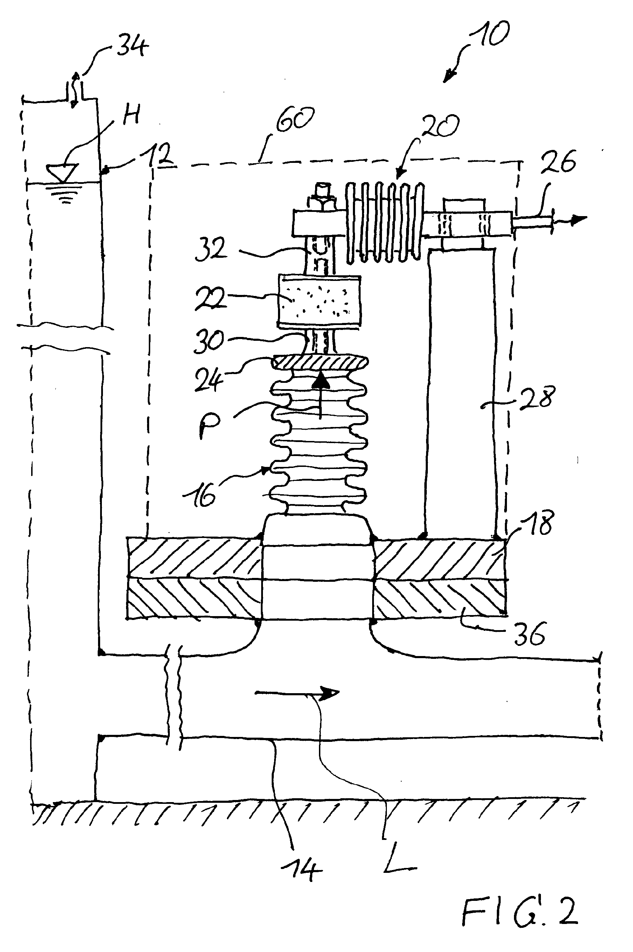

Figur 1 zeigt eine Übersichtsdarstellung in schematischer Art und Weise für die hydrostatische Füllstandsmessung eines Behälters 12 mittels einer Füllstandsmessvorrichtung 10, die in Figur 1 im Vergleich zum Behälter 12 vergrößert als Detail A dargestellt ist. Eine nähere Beschreibung der Füllstandsmessvorrichtung 10 erfolgt weiter unten anhand der Figur 2.

Ein Behälter 12 ist mit einem Fluid bis zur Füllstandshöhe H gefüllt. Über eine Entlüftungsöffnung 34 kommuniziert die Füllstandshöhe H des Fluids innerhalb des Behälters 12 mit dem Umgebungsdruck.

Im in Figur 1 rechten unteren Endbereich des Behälters 12 ist eine Rohrleitung 14 an diesen angeschlossen, die mit dem Inneren des Behälters 12 in Kommunikationsverbindung steht. Senkrecht zur Längsrichtung der Rohrleitung 14 ist eine Füllstandsmessvorrichtung 10 angeschlossen, die über eine elektrisch leitende Verbindung 26 an weitere Komponenten zur Auswertung der Füllstandshöhe H angeschlossen ist.

Wie weiter unten beschrieben werden wird, gibt die Füllstandsmessvorrichtung 10 Messsignale über die Leitung 26 an eine Verstärkereinheit 42 ab, die die Signale an eine Auswertmesseinheit 40 weiterleitet. Die Auswertmesseinheit 40 berechnet aufgrund der von der Vorrichtung 10 abgegebenen Messsignale, deren Größe von dem hydrostatischen Druck innerhalb des Behälters 12 abhängt, die Füllstandshöhe H und leitet die gemessenen Werte beispielsweise an eine Anzeigeeinheit 44 und/oder eine Speichereinheit 46 und/oder eine Überwachungseinheit 48 weiter. Die Überwachungseinheit 48 kann, jeweils abhängig von der momentanen Füllstandshöhe H weitere Aggregate beaufschlagen, um weitere Maßnahmen zu veranlassen, beispielsweise bei Erreichen eines Mindestoder Maximalniveaus H des Fluids innerhalb des Behälters 12.

In Figur 2 ist ein Ausführungsbeispiel einer Füllstandsmessvorrichtung 10 für die Messung der Füllstandshöhe H des Behälters 12 dargestellt.

An die Rohrleitung 14, die, wie bereits oben erwähnt, mit dem Behälterinnern in Kommunikationsverbindung steht, ist oberseitig eine Rohrleitungsanschlusseinheit 36 angeschlossen, die als Flansch ausgebildet ist. An diese Rohrleitungsanschlusseinheit 36 ist eine Anschlusseinheit 18 einer Balgeinheit 16 flüssigkeitsdicht angeschlossen, die ebenfalls als Flansch ausgebildet ist. Die beispielsweise als Schraubenverbindung ausgebildete Verbindungsart ist in Figur 2 nicht näher dargestellt. Ebenso können zusätzliche Dichtungsmittel zwischen den beiden Anschlusseinheiten 18, 36 vorhanden sein, die in Figur 2 ebenfalls nicht dargestellt sind.

An die Anschlusseinheit 18 schließt eine Balgeinheit 16 an, die vertikal zur Längsrichtung L der Rohrleitung 14 angeordnet ist und bevorzugt als Metallbalg ausgebildet ist. Das Innere der Balgeinheit 16 steht mit dem Inneren der Rohrleitung 14 und damit mit dem Inneren des Behälters 12 in Kommunikationsverbindung, sodass innerhalb der Balgeinheit 16 der hydrostatische Druck aufgrund des Flüssigkeitsstandes H innerhalb des Behälters 12 ansteht. Gegenüberliegend zur Anschlusseinheit 18 besitzt die Balgeinheit 16 eine Stirndruckplatte 24, an der auch der hydrostatische Druck P ansteht.

Durch die Balgausbildung der Balgeinheit 16 ist aufgrund der Balgeigenschaften eine Längenausdehnung der Balgeinheit 16 in Richtung der Kraft P möglich. Diese Längenausdehnung aufgrund des jeweils vorherrschenden hydrostatischen Druckes - abhängig von der Füllhöhe H des Behälters 12 - wird über eine erste Verbindungseinheit 30 auf eine elastische Einheit 22 übertragen, die als Gummipuffer ausgebildet ist. Die elastische Einheit 22 überträgt über eine zweite Verbindungseinheit 32 die Vertikalverschiebung der Balgeinheit 16 auf eine Präzisionswägeeinheit 20, die als Biegestab-Wägezelleneinheit 20 ausgebildet ist. Biegestab-Wägezelleneinheit 20 ist als Kragträger ausgebildet und über einen Lagerrohrstab 28 mit der Anschlusseinheit 18 verbunden. Aufgrund des an der Stirndruckplatte 24 der Balgeinheit 16 anstehenden hydrostatischen Druckes P biegt sich die Biegestab-Wägezelleneinheit 20 nach oben durch. Der Durchbiegungsweg beträgt in praktischen Anwendungsfällen wenige Zehntel Millimeter.

Die Biegestab-Wägezelleneinheit 20 weist in der Figur 2 nicht näher dargestellte Dehnmessstreifen auf, die aufgrund der Durchbiegung der auskragenden Biegestab-Wägezelleneinheit 20 elektrische Signale 26 über die Leitung an eine Verstärkereinheit 42 (Figur 1) abgeben. Die Signale, die die Biegestab-Wägezelleneinheit 20 abgibt, stellen ein Maß für den hydrostatischen Druck P in Abhängigkeit der Füllhöhe H des Fluids innerhalb des Behälters 12 dar. Diese Signale können über die Verstärkereinheit 42 in Verbindung mit der Auswerteinheit 40 ausgewertet werden, sodass die Füllstandshöhe H innerhalb des Behälters 12 mit einer sehr großen Genauigkeit berechnet werden kann. Durch die senkrechte Anordnung der Balgeinheit 16 kommt es praktisch zu keinerlei Verschmutzung, sodass eine dauerhaft zuverlässig hohe Genauigkeit und Funktionalität gewährleistet werden kann. Die Biegestab-Wägezelleneinheit 20 ist ein industriell gefertigtes Bauteil, das eine robuste Ausführung aufweist und darüber hinaus dynamisch belastbar ist.

Mit der dargestellten Vorrichtung ist es möglich, die Füllstandsmessvorrichtung 10 innerhalb einer Rohrleitung 14 anzuordnen, die entfernt vom Behälter 12 angeordnet werden kann. Darüber hinaus kann die Auswerteinheit 40 in weiter entfernten Kontrollräumen vorhanden sein, sodass problemlos den hohen Anforderungen in explosionssicherer Umgebung mit der dargestellten Vorrichtung 10 entsprochen werden kann.

Die Füllstandsmessvorrichtung 10 ist von einem Gehäuse 60 umgeben, das einen Einsatz in explosionsgefährdeten Bereichen ermöglicht.

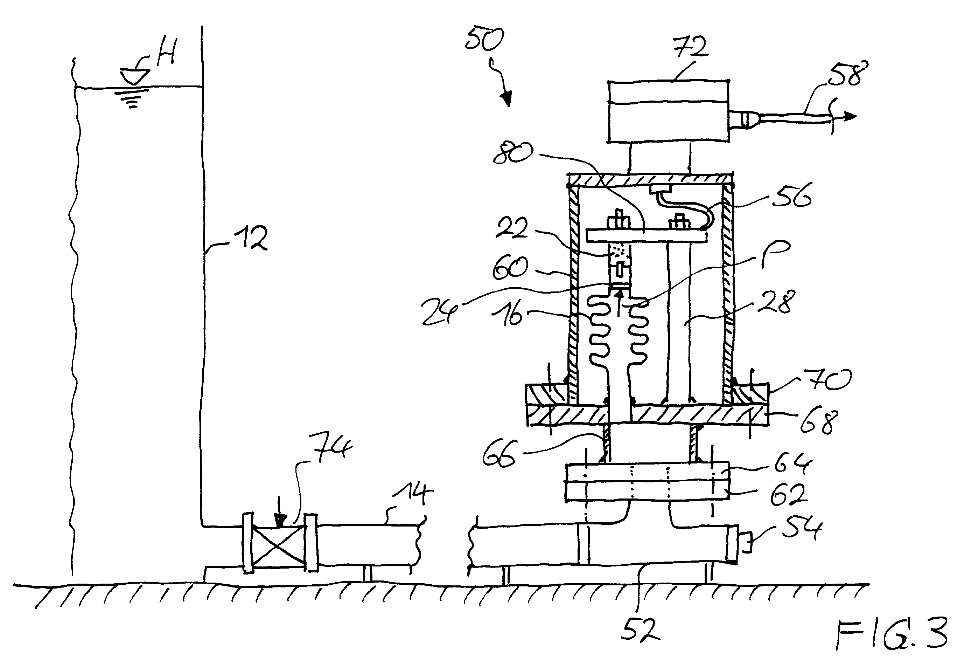

In Fig. 3 ist eine weitere schematische Detailschnittansicht einer Füllstandsmessvorrichtung 50 gemäß einem zweiten Ausführungsbeispiel dargestellt. Die Füllstandsmessvorrichtung 50 ähnelt in weiten Teilen der oben beschriebenen Füllstandmessvorrichtung 10. Dieselben Bauteile tragen dasselbe Bezugszeichen und werden nicht nochmals beschrieben.

An das Behältnis 12 ist im unteren Bereich über eine Absperreinheit 74 die Rohrleitung 14 angeschlossen. Die Rohrleitung 14 kann als starres Rohr oder auch als Schlauch ausgebildet sein. Am Ende der Rohrleitung 14 befindet sich ein T-Stück 52, das in seinem in Fig. 3 rechten Endbereich mittels eines Stopfens 54 verschlossen ist. Der Steg des T-Stücks 52 ist an einen Flansch 62 angeschlossen.

Mit dem Flansch 62 ist oberseitig ein Gegenflansch 64 verschraubt, der wiederum oberseitig einen Stutzen 66 aufweist, der mit einem weiteren Flansch 68 verbunden ist.

Der weitere Flansch 68 ist über einen Ringflansch 70 mit dem Gehäuse 60 verbunden. Mit dem auf dem weiteren Flansch 68 angeschlossenen Lagerstab 28 ist oberseitig eine Präzisionswägeeinheit 80 als Kragträger angeschlossen, die als DMS-Wägezelle ausgebildet ist und einen relativ flachen Querschnitt aufweist. Weiterhin ist an den weiteren Flansch 68 der Metallbalg der Balgeinheit 16 angeschlossen, dessen oberseitig vorhandene abschließende Stirndruckplatte 24 über die Gummipuffereinheit 22 auf den auskragenden Bereich der Präzisionswägeeinheit 80 einwirkt. Innerhalb der Balgeinheit 16 steht nach oben wirkende Druck P in Abhängigkeit der Füllstandshöhe H des Behältnisses 12 an der Stirndruckplatte 24 an. Aufgrund der elastischen Verformung der Präzisionswägeeinheit 80 in Kombination mit dem vorhandenen DMS-Messstreifen wird ein elektrisches Signal erzeugt, das über die Leitung 56 an ein Anschlussgehäuse 72 übertragen wird, das die elektrischen Signale über ein Kabel 58 an weitere Auswertstationen abgibt.

Insgesamt bietet die Vorrichtung 10 oder 50 eine Möglichkeit, den Füllstand H innerhalb eines Behälters 12 mit einer extrem hohen Genauigkeit zu messen und gleichzeitig eine dauerhafte Funktionalität zu gewährleisten. Dadurch, dass direkt am Behälter 12 selbst keine Messvorrichtungen anzuordnen sind, kann den strengen Anforderungen an explosionsgeschützte Umgebungen problemlos Rechnung getragen werden.

## Patentansprüche

1. Füllstandsmessvorrichtung (10, 50) zur Messung der Füllstandshöhe (H) eines mit einem Fluid gefüllten Behälters (12), beruhend auf dem Prinzip der hydrostatischen Füllstandsmessung, mit
- einer, insbesondere im unteren Bereich des Behälters (12) angeschlossenen, Rohrleitung (14), die mit dem Innern des Behälters (12) in Kommunikationsverbindung steht,
- einer mit der Rohrleitung (14) in Kommunikationsverbindung stehenden Balgeinheit (16) mit einer Stirndruckplatte (24), an der der hydrostatische Druck (P) des gefüllten Behälters (12) ansteht,
- einer Präzisionswägeeinheit (20, 80), die mit der Stirndruckplatte (24) der Balgeinheit (16) direkt oder indirekt in Wirkverbindung steht und die als Biegestabwägezelleneinheit mit zumindest einem Dehnungsmessstreifen ausgebildet ist, der in Abhängigkeit der Durchbiegung der Biegestabwägezelleneinheit Messsignale abgibt, und
- einer Auswerteinheit (40), die die Messsignale der Präzisionswägeeinheit (20) auswertet und die Füllstandshöhe (H) berechnet und Letztere einer Anzeigeeinheit (44) und/oder Speichereinheit (46) und/oder Überwachungseinheit (48) zuführt.

2. Füllstandsmessvorrichtung nach Anspruch 1,
**dadurch gekennzeichnet, dass**
zwischen Balgeinheit (16) beziehungsweise Stirndruckplatte (24) der Balgeinheit (16) und der Präzisionswägeeinheit (20) eine elastische Einheit angeordnet ist.

3. Füllstandsmessvorrichtung nach Anspruch 2,
**dadurch gekennzeichnet, dass**
die elastische Einheit als Gummipuffereinheit (22) ausgebildet ist.

4. Füllstandsmessvorrichtung nach einem oder mehreren der vorstehenden Ansprüche,
**dadurch gekennzeichnet, dass**
die Balgeinheit (16) aus metallischem Material besteht.

5. Füllstandsmessvorrichtung nach einem oder mehreren der vorstehenden Ansprüche,
**dadurch gekennzeichnet, dass**
die Balgeinheit (16) ein- oder mehrwandig, insbesondere zweiwandig, ausgebildet ist.

6. Füllstandsmessvorrichtung nach einem oder mehreren der vorstehenden Ansprüche,
**dadurch gekennzeichnet, dass**
die Balgeinheit (16) im Wesentlichen vertikal angeordnet ist.

7. Füllstandsmessvorrichtung nach Anspruch 4,
**dadurch gekennzeichnet, dass**
die Balgeinheit (16) aus Edelstahl, Buntmetall oder Incoloy (eingetragene Marke) besteht.

8. Füllstandsmessvorrichtung nach einem oder mehreren der vorstehenden Ansprüche,
**dadurch gekennzeichnet, dass**
die Präzisionswägeeinheit (20) eine Linearität von 0,02 bis 0,001 %, insbesondere ca. 0,01 %, vom Endwert aufweist.

9. Füllstandsmessvorrichtung nach einem oder mehreren der vorstehenden Ansprüche,
**dadurch gekennzeichnet, dass**
die Balgeinheit (16) eine Anschlusseinheit (18) zum flüssigkeitsdichten Anschluss an eine Rohrleitungsanschlusseinheit (36) der Rohrleitung (14) aufweist.

10. Füllstandsmessvorrichtung nach Anspruch 9,
**dadurch gekennzeichnet, dass**
die Anschlusseinheiten (18, 36) als Flansche mit Verschraubung ausgebildet sind.
